# EUROPEAN PATENT SPECIFICATION

(11) **EP 1 496 606 B1**
(45) Date of publication and mention of the grant of the patent: **13.12.2006**
(21) Application number: 04015952.7
(22) Date of filing: 07.07.2004
(51) Int. Cl.: H02P 1/26

(54) **Electric induction motor**
Asynchronmotor
Moteur électrique à induction

(30) Priority: 09.07.2003 IT TO20030529
(43) Date of publication of application: 12.01.2005
(73) Proprietor: Emerson Appliance Motors Europe S.r.l., 10024 Moncalieri TO (IT)
(72) Inventor: Taglioni, Riccardo, 14100 Asti (IT)
(74) Representative: Quinterno, Giuseppe

(56) References cited:
- AT-B- 378 635
- DE-A- 1 936 880
- GB-A- 2 223 895
- US-A- 3 202 896
- US-A- 4 792 740

## Description

The present invention relates to an electric induction motor, supplied with single-phase alternating current, for use particularly in domestic appliances such as dishwashers, ventilation equipment, and the like.

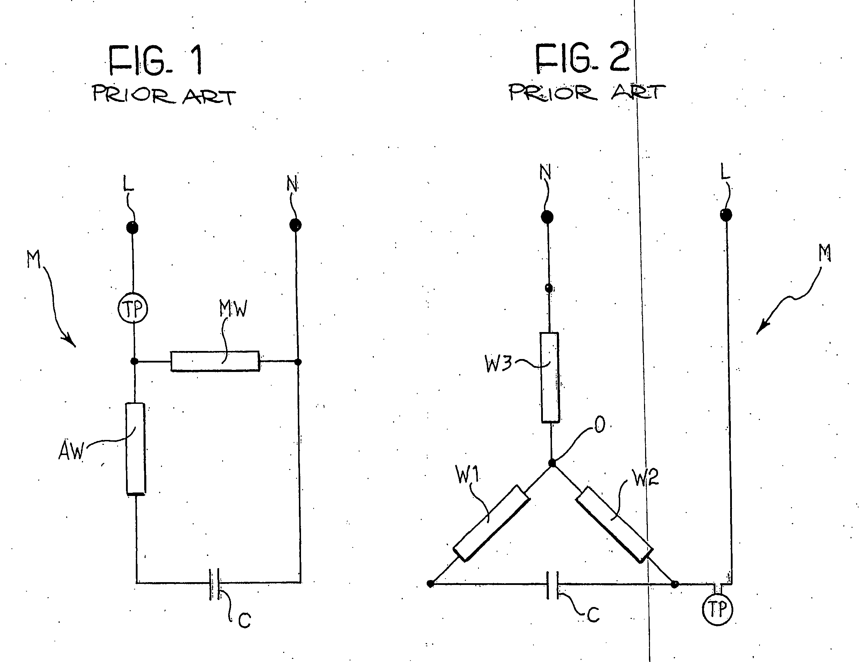

Figure 1 of the attached drawings shows schematically a single-phase induction motor M according to the prior art. This motor comprises a stator with a single-phase main winding MW, connected between two supply terminals L and N which are designed for connection to a single-phase alternating current supply line. The motor M also comprises an auxiliary winding AW, displaced by 90 electrical degrees from the main winding MW. A starting capacitor C is connected in series with the auxiliary winding AW. The assembly consisting of the auxiliary winding AW and the capacitor C is connected electrically in parallel with the main winding MW. A thermal protection device TP is connected between one terminal of the main winding MW and the supply terminal L.

The object of the present invention is to provide an electric induction motor, supplied with single-phase alternating current, which permits the development of a higher starting torque and greater efficiency, as well as the possibility of operation at two or more speeds, again with high efficiency, or if necessary the development of a second, higher-power, operating characteristic, in addition to a normal operating characteristic.

This object is achieved according to the invention with an electric induction motor whose principal characteristics are specified in the attached claim 1.

Further characteristics and advantages of the invention will be made clear by the following detailed description, provided purely by way of example and without restrictive intent, with reference to the attached drawings, in which:
Figure 1, described above, is a diagram of a single-phase induction motor according to the prior art;
Figure 2 is a basic diagram of another motor according to the prior art;
Figure 3 is a diagram of an embodiment of electric motor according to the invention; and
Figure 4 shows torque-speed and power-speed characteristics for the motor shown in Figure 3.

In Figure 2, an electric induction motor of a known type, supplied with single-phase alternating current, is indicated as a whole by M. This motor comprises two supply terminals L and N, designed for connection to a single-phase alternating current supply line.

The motor M comprises a stator, of a known type, provided with three windings W1, W2, and W3 spaced 120° from each other and connected in star configuration. The star point of the set of these windings is indicated by O.

The letter C indicates a phase shift capacitor, which interconnects the ends of the windings W1 and W2 opposite the star point O.

The end of the winding W3 (common winding) opposite the star point O is connected to the supply terminal N.

The end of the winding W2 opposite the star centre O is connected to the supply terminal L, with the interposition of a thermal protection device TP.

The motor M of Figure 2 can essentially be considered to be a three-phase motor, having a starting capacitor, but supplied in the same way as a single-phase induction motor.

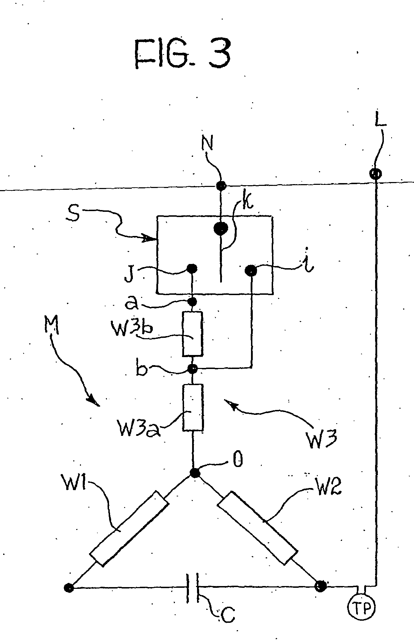

Figure 3 shows the embodiment of a motor M according to the invention. In this figure, parts and elements described previously in relation to the known basic diagram shown in Figure 2 have been given the same alphanumeric references as those used previously.

With reference to the diagram of Figure 3, the third winding W3, or common winding, is associated with a switch indicated as a whole by S. Two terminals of the common winding W3, indicated by a and b respectively, are connected to this switch S. The terminal a is at the end of the winding W3 opposite the star point O, and is connected to a fixed contact j of the switch S. The terminal b is at an intermediate point of the winding W3 (not necessarily halfway along the winding and is connected to a fixed contact i of the switch S.

The common winding W3 is thus divided into two portions W3a and W3b.

The said switch S comprises a moving contact k which can be switched between the fixed contacts i and j.

This switch can be used to obtain a high starting torque (with the moving contact k on the fixed contact i) and low consumption, and to provide two different operating speeds (with the moving contact k on the fixed contact i, for starting and high speed operation, or on the fixed contact j, for the second, low speed).

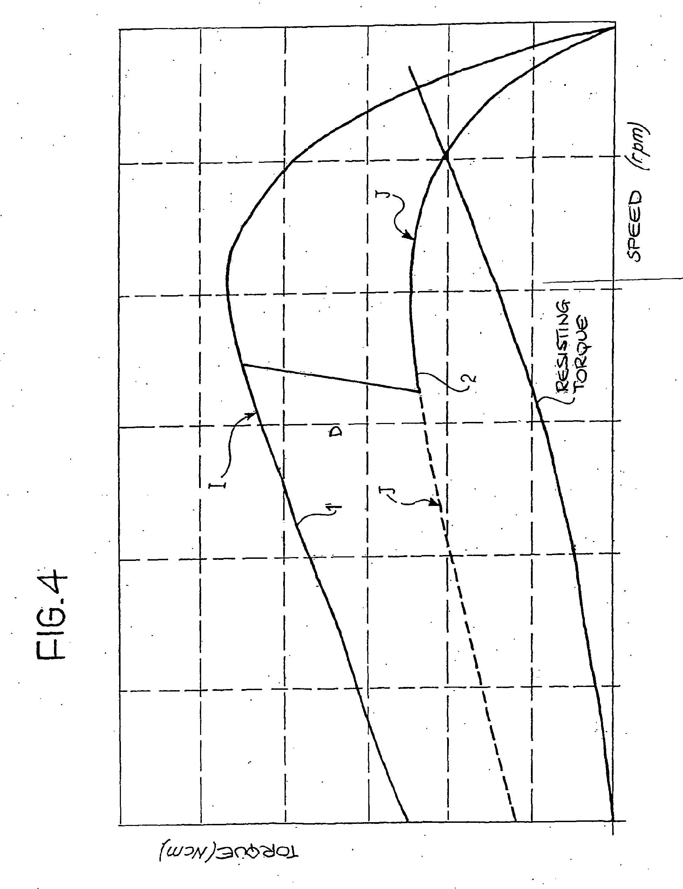

The torque/speed characteristics which can be obtained are indicated by the corresponding curves I and J in Figure 4, which also shows a curve indicating the variation of a load (resisting torque), for example a hydraulic load in a dishwasher.

In the embodiment shown in Figure 3, the common winding W3 can be further divided, or portions of winding can be added to it, to provide one or more further operating speeds.

The switch S of Figures 3 can be a simple mechanical or pneumatic switch, or a solid-state electronic switch.

A further advantage of the motors according to the invention is the possibility of easily constructing a reversible motor having the same electromechanical characteristic in both directions of rotation.

In any case, the motors according to the invention have very low vibrations, since the magnetic circuit is naturally well balanced, in other words balanced between the three phases.

## Claims

1. Electric induction motor (M) comprising
two power supply terminals (L, N) for connection to a single-phase alternating current supply line;
a stator having three windings (W1, W2, W3) at 120° to each other, connected in a star configuration;
a first and a second winding (W1, W2) having their ends opposite the star point (O) interconnected by a starting capacitor (C); one of the said first and second windings (W1, W2) and the third winding, or common winding, (W3) being connected or connectable to the said supply terminals (L, N);
the motor (M) being **characterized in that** the third winding, or common winding, (W3) has
an end terminal (a) located at the end of the said winding (W3) opposite the star point (O) of the star configuration formed by the said windings (W1, W2, W3), and
at least one supplementary terminal (b) located between the star point (O) and the end terminal (a) as an intermediate point of the said third winding (W3);
the said supplementary terminal (b) and the end terminal (a) being selectively connectable, one at a time, to a supply terminal (N) by means of a switch device (S).

2. Electric motor according to Claim 1, in which the said at least one supplementary terminal (b) of the third winding or common winding (W3) is an intermediate point of the said third winding (W3) such that the said third winding (W3) is divided into at least two portions (W3a, W3b).

## Patentansprüche

1. Elektrischer Asynchronmotor (M), umfassend
zwei Stromversorgungsklemmen (L, N) zum Anschluss an einer Einphasenwechselstromzuleitung;
einen Stator, der drei, im 120°-Winkel zueinander stehende Wicklungen (W1, W2, W3) aufweist, welche in Sternkonfiguration geschaltet sind;
eine erste und eine zweite Wicklung (W1, W2), deren Enden gegenüber dem Stempunkt (O) durch einen Startkondensator (C) miteinander verbunden sind; wobei eine von der ersten und der zweiten Wicklung (W1, W2) und die dritte Wicklung oder gemeinsame Wicklung (W3) an den Anschlussklemmen (L, N) angeschlossen oder anschließbar sind;
wobei der Motor (M) **dadurch gekennzeichnet ist, dass** die dritte Wicklung oder gemeinsame Wicklung (W3) Folgendes aufweist:
eine Endklemme (a), die sich am Ende der Wicklung (W3) gegenüber dem Sternpunkt (O) der durch die Wicklungen (W1, W2, W3) gebildeten Sternkonfiguration befindet, und
zumindest eine Zusatzklemme (b), die sich als Zwischenpunkt der dritten Wicklung (W3) zwischen dem Stempunkt (O) und der Endklemme (a) befindet;
wobei die Zusatzklemme (b) und die Endklemme (a) mittels einer Schaltvorrichtung (S) jeweils einzeln gezielt an einer Anschlussklemme (N) anschließbar sind.

2. Elektromotor gemäß Anspruch 1, wobei die zumindest eine Zusatzklemme (b) der dritten Wicklung oder gemeinsamen Wicklung (W3) ein Zwischenpunkt der dritten Wicklung (W3) ist, so dass die dritte Wicklung (W3) in zumindest zwei Abschnitte (W3a, W3b) geteilt ist.

## Revendications

1. Moteur à induction électrique (M) comprenant
deux bornes d'alimentation (L, N) destinées à être reliées à une ligne d'alimentation en courant alternatif monophasé ;
un stator possédant trois enroulements (W1, W2, W3) à 120° les uns par rapport aux autres, reliés dans une configuration en étoile ;
un premier et un second enroulements (W1, W2) ayant leurs extrémités opposées au point d'étoile (O) reliées par un condensateur de démarrage (C) ; l'un desdits premier et second enroulements (W1, W2) et le troisième enroulement, ou enroulement commun, (W3) étant reliés ou pouvant être reliés auxdites bornes d'alimentation (L, N) ;
le moteur (M) étant **caractérisé en ce que** le troisième enroulement, ou enroulement commun, (W3) possède
une borne d'extrémité (a) située à l'extrémité dudit enroulement (W3) opposée au point d'étoile (O) de la configuration en étoile formée par lesdits enroulements (W1, W2, W3), et
au moins une borne supplémentaire (b) située entre le point d'étoile (O) et la borne d'extrémité (a) comme un point intermédiaire dudit troisième enroulement (W3) ;
ladite borne supplémentaire (b) et la borne d'extrémité (a) pouvant être sélectivement reliées, une par une, à une borne d'alimentation (N) à l'aide d'un dispositif commutateur (S).

2. Moteur électrique selon la revendication 1, dans lequel ladite au moins une borne supplémentaire (b) du troisième enroulement ou enroulement commun (W3) est un point intermédiaire dudit troisième enroulement (W3) de telle sorte que ledit troisième enroulement (W3) soit divisé en au moins deux parties (W3a, W3b).
